## Europäisches Patentamt
## European Patent Office
## Office européen des brevets

(11) Veröffentlichungsnummer: **0 168 381**
**B1**

(12) # EUROPÄISCHE PATENTSCHRIFT

(45) Veröffentlichungstag der Patentschrift:
07.12.88

(51) Int. Cl.⁴: **G 01 B 21/00**

(21) Anmeldenummer: **85890138.2**

(22) Anmeldetag: **25.06.85**

(54) **Längenmesseinrichtung.**

(30) Priorität: **03.07.84 AT 2138/84**

(43) Veröffentlichungstag der Anmeldung:
**15.01.86 Patentblatt 86/3**

(45) Bekanntmachung des Hinweises auf die Patenterteilung:
**07.12.88 Patentblatt 88/49**

(84) Benannte Vertragsstaaten:
**BE CH DE FR GB IT LI LU NL SE**

(56) Entgegenhaltungen:
**EP-A- 0 143 773**
**DE-A- 3 210 962**
**DE-B- 1 231 595**
**DE-B- 2 724 858**
**DE-B- 2 820 753**
**US-A- 2 336 550**

(73) Patentinhaber: **RSF-Elektronik Gesellschaft m.b.H.,
A-5121 Tarsdorf 93 (AT)**

(72) Erfinder: **Rieder, Heinz, Riedersbach 90, A-5120 St.
Pantaleon (AT)**
Erfinder: **Schwaiger, Max, A-5121 Ostermiething (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

ACTORUM AG

## Beschreibung

Die Erfindung betrifft eine Längenmesseinrichtung mit einer Korrektureinrichtung zum Ausgleichen von Messfehlern. Eine derartige Längenmesseinrichtung ist Gegenstand der am 5.6.85 veröffentlichten EP-A 0 143 773 mit Priorität vom 22.11.83.

Bei Längenmesseinrichtungen dieser Art sollen mögliche Messfehler korrigiert werden. Solche Messfehler können durch Massstabfehler, Abweichungen des Richtungsverlaufes des Massstabes von der tatsächlichen Messrichtung, Abweichungen des Führungsverlaufes vom Massstabverlauf oder durch Maschinenfehler von Werkzeugmaschinen bedingt sein. Es ist bekannt, das Korrekturprofil zunächst nach dem Messergebnis eines übergeordneten Messsystems, z.B. eines Laser-Interferometers, einzustellen, um die Messfehler auszugleichen.

Eine Längenmesseinrichtung wie beschrieben in der EP-A 0 143 773 hat den prinzipiellen Vorteil, dass nur die Abtastplatte am Massstab geführt wird, wodurch ein fixer Abstand dieser Platte vom Massstab gewährleistet bzw. ihr Abheben vom Massstab sicher verhindert wird und die Abtastplatte dem Massstab genau folgt. Bei durchzuführenden Korrekturen und der Abtastung des Korrekturprofiles wird die Abtastplatte gegenüber der übrigen Abtasteinheit verstellt. In der EP-A 143 773 sind keine näheren Angaben darüber enthalten, wie die Abtastplatte abhängig vom abgetasteten Korrekturprofil gegenüber der übrigen Abtasteinheit zu verstellen ist. Es muss angenommen werden, dass für die Verstellung gesonderte, auf die Abtastplatte wirkende Einrichtungen vorgesehen werden.

Aus der De-B 2 724 858 ist es bekannt, die gesamte Abtasteinheit am Massstab in Form eines Schlittens oder Wagens zu führen, wobei die Abtastplatte nicht am Massstab anliegt und auch dem Massstab nicht genau folgt. Die Abtastplatte ist über Blattfedern an der Abtasteinheit gehalten und kann über einen Exzenter und einen ein Korrekturprofil abtastenden Hebel in Längsrichtung der Abtasteinheit entsprechend dem Verlauf des Korrekturprofiles verstellt werden. Das Korrekturprofil besteht aus einer Gliederkette, deren Einzelglieder über Langloch-Bolzenverbindungen verbunden sind und die mit Hilfe von Exzentern an den Enden der einzelnen Glieder aus dem ursprünglich geradlinigen, zum Massstab parallelen Richtungsverlauf zur Bildung des Korrekturprofiles ausgelenkt und fixiert werden kann. Bei einer anderen bekannten Konstruktion wird anstelle einer Gliederkette ein Winkelprofil verwendet, bei dem ein Flansch in gleichbleibenden Abständen ausgeschnitten ist, wobei der andere Flansch mit Hilfe von. Einstellgliedern zu einem Korrekturprofil gebogen werden kann.

Aus der DE-B 2 820 753 ist es bei einer wieder als dem Massstab folgender Messwagen ausgebildeten Abtasteinheit bekannt, die Abtastplatte um eine Querachse schwenkbar zu lagern und die Schwenkeinstellung durch Abtastung eines Korrekturprofiles mit Hilfe eines Fühlerhebels zu bestimmen. Das Korrekturprofil ist Bestandteil einer Gehäusewandung eines Massstab und Abtasteinheit aufnehmenden Gehäuses.

Aus der US-A 2 336 550 ist es für andere Zwecke, nämlich zur Einstellung eines Ablenkprismas und der Ableitspiegel bei Spektralanalysegeräten bekannt, einen vorgegebenen Bewegungsverlauf dieser Teile von einer Kurvenbahn abzuleiten, die aus einem über Stellschrauben biegbaren Metallband besteht.

Aufgabe der Erfindung ist es, bei einer Längenmesseinrichtung der genannten Art eine einfache und betriebssichere Korrekturmöglichkeit bei geringstem Anlagenaufwand vorzusehen.

Die gestellte Aufgabe wird durch die im Anspruch 1 angegebenen Merkmale gelöst.

Die Pleuelstange stellt die Mitnahmeverbindung für die Abtastplatte her. Durch ihre Längsverstellung mit Hilfe des Stelltriebes der Korrektureinrichtung wird gleichzeitig die gewünschte Korrektur entsprechend dem eben abgetasteten Korrekurprofil vorgenommen, wobei die eingangs erwähnte Längenmesseinrichtung nur durch Stelltrieb, Korrekturprofil und Fühler zu ergänzen ist.

Eine mögliche Ausbildung des Stelltriebes entnimmt man dem Anspruch 2. Dabei ist eine direkte Kupplung von Abtastplatte und Stelltrieb ohne Zwischenschaltung von Federn möglich.

Eine ebenfalls äusserst einfache Ausgestaltung des Stelltriebes ist im Anspruch 3 angegeben.

Es kann mit geringen Antriebskräften des Fühlers am Korrekturprofil gearbeitet werden. Dadurch ist eine Leichtbauweise für das Korrekturprofil möglich, wie sie im Anspruch 4 angegeben ist.

Verschiedenste Korrekturprofile entsprechend verschiedenen Anforderungen lassen sich mit einer Ausbildung gemäss Anspruch 5 verwirklichen.

Sieht man eine Ausbildung des Korrekturprofiles nach Anspruch 6 vor, so erhält man mit dem Laminat einen bei geringer Eigenmasse ausreichend steifen und dabei trotzdem in die verschiedensten Korrekturkurven verformbaren Bauteil, bei dem auch das Problem der Verankerung der Stellschrauben am Bauteil in einfacher und zufriedenstellender Weise gelöst ist.

Weitere Einzelheiten und Vorteile des Erfindungsgegenstandes gehen aus der nachfolgenden Zeichnungsbeschreibung hervor.

In der Zeichnung ist der Erfindungsgegenstand beispielsweise veranschaulicht. Es zeigen

Fig. 1 eine erfindungsgemässe Längenmesseinrichtung im Längsschnitt durch ihren Träger,

Fig. 2 einen Horizontalschnitt durch die Längenmesseinrichtung nach Fig. 1,

Fig. 3 einen zugeordneten Querschnitt,

Fig. 4 eine weitere Längenmesseinrichtung im Längsschnitt durch ihren Träger,

Fig. 5 einen Querschnitt zu Fig. 4,

Fig. 6 einen Teilquerschnitt durch den Träger mit einer Ausführungsvariante des Korrekturprofiles und

Fig. 7 in entsprechender Darstellung eine weitere Ausführungsvariante des Korrekturprofiles.

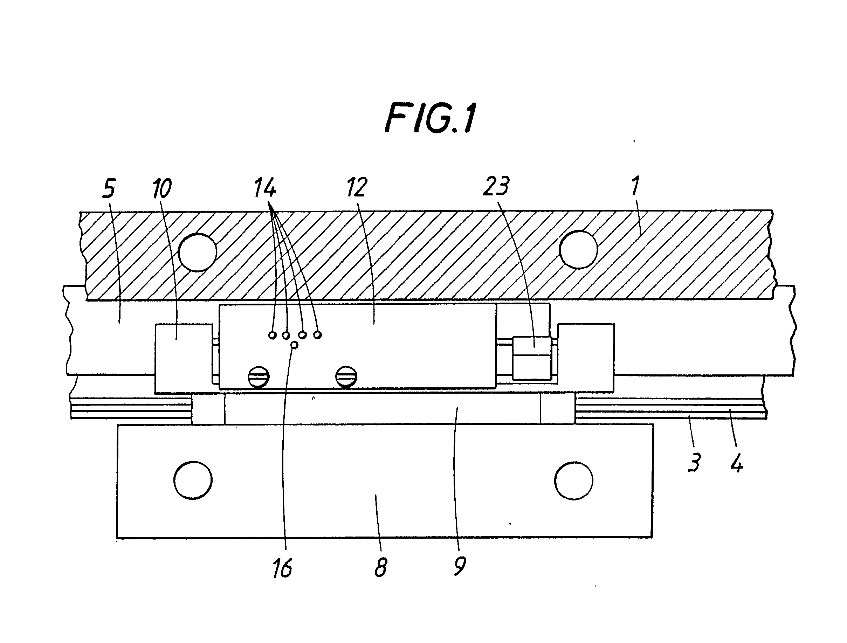

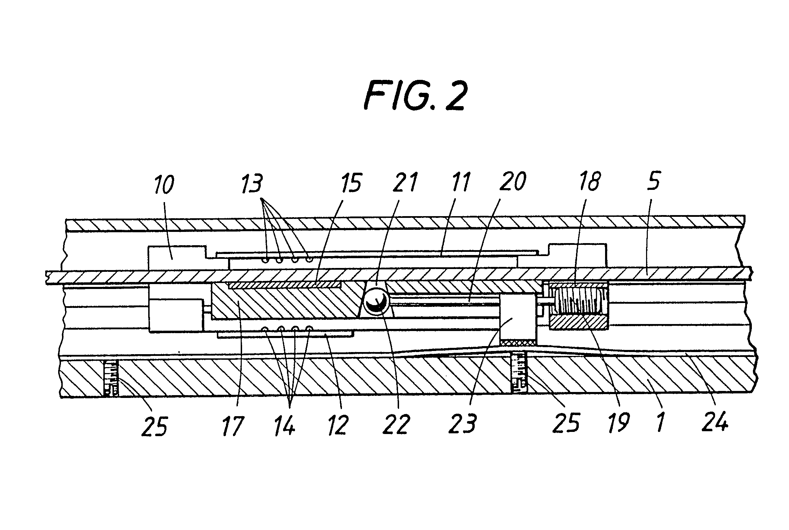

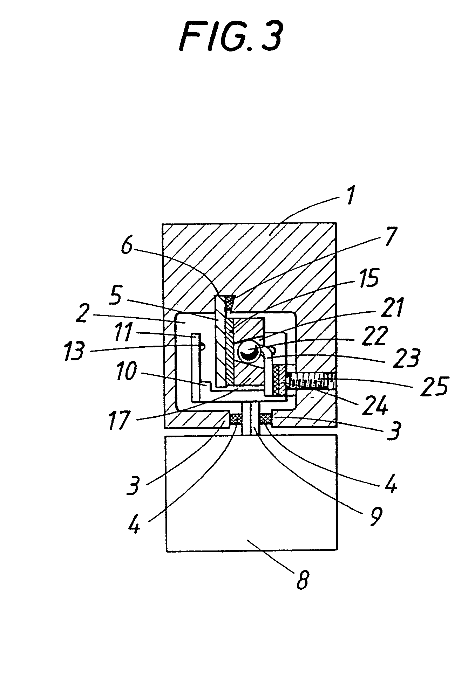

Nach den Fig. 1–3 ist ein aus einem gezogenen Strangpressprofil bestehender, rohrförmiger Träger 1 vorgesehen, dessen Rohröffnung 2 unten über einen zwischen Flanschen 3 gebildeten, durch Dichtlippen 4 abgeschlossenen Schlitz zugänglich ist. In der Rohröffnung 2 ist ein Inkrementalglasmassstab 5, der eine Inkrementalmessteilung trägt, angebracht. Beim Ausführungsbeispiel greift der eine Rand des Massstabes 5 in eine Schwalbenschwanznut 6 ein und ist dort durch eine elastische Schnur 7 festgehalten.

Ein dem zu messenden Objekt zugeordneter Messfühler besitzt ein Ankoppelungsstück 8, das über ein durch den Schlitz und zwischen den Dichtlippen 4 hindurch geführtes Schwert 9 mit einer Abtasteinheit verbunden ist. Nach den Fig. 1–3 besteht diese Abtasteinheit aus einem Schiffchen 10, an dem an den beiden Seiten des Massstabes 5 Platinen 11, 12 befestigt sind. Die Platine 11 trägt Leuchtdioden 13 und die Platine 12 Fototransistoren 14. Ferner nehmen die Platinen 11, 12 Verstärker und Auswertungsschaltungen auf. Die Platinen 11, 12 sind, wie erwähnt, mit dem Schiffchen 10 fest verbunden. Zwischen ihnen ist am Massstab eine Abtastplatte 15 geführt, die beispielsweise vier je einem Fototransistor 14 zugeordnete Gitter mit dem Inkrementalmassstab entsprechender Teilung enthält, die gegeneinander um ganze Teilungsinkremente und Teilungsbruchteile versetzt sind, so dass an den Fototransistoren 14 gegeneinander phasenverschobene Signale auftreten. Ein weiteres Gitter mit zugeordneter Beleuchtungseinrichtung und einem Fototransistor 16 kann zur Abtastung von Referenzmarken am Massstab 6 dienen.

Die Abtastplatte 15 sitzt in einer dieser Platte zwischen den Beleuchtungseinrichtungen 13 und den Transistoren 14 freigebenden Halterung 17 und ist mit dieser Halterung gegenüber dem Schiffchen 10 in Längsrichtung des Massstabes 5 verschiebbar. Für die Längsverstellung ist am Schiffchen ein Muttergewinde 18 angebracht, in das ein Schraubenbolzen 19 eingreift. Dieser Schraubenbolzen 19 steht über eine Pleuelstange 20 mit einer in eine Rast 21 der Haltekonstruktion 17 eingreifenden Kugel 22 in Verbindung. Auf der Pleuelstange 20 sitzt ein Hebel 23, der durch eine nicht dargestellte Feder mit einem Korrekturprofil 24 in Eingriff gehalten wird und entsprechend dem Verlauf dieses Korrekturprofiles 24 die Pleuelstange 20 verdreht und damit über Muttergewinde 18 und Gewindebolzen 19 in Längsrichtung gegenüber dem Schiffchen 10 verstellt.

Nach den Fig. 1–3 besteht das Korrekturprofil aus einem entlang der einen Seitenwand der Rohröffnung 2 gespannten Metallband, das in seinem Verlauf durch Wurmschrauben 25 in der Rohrwandung eingestellt werden kann.

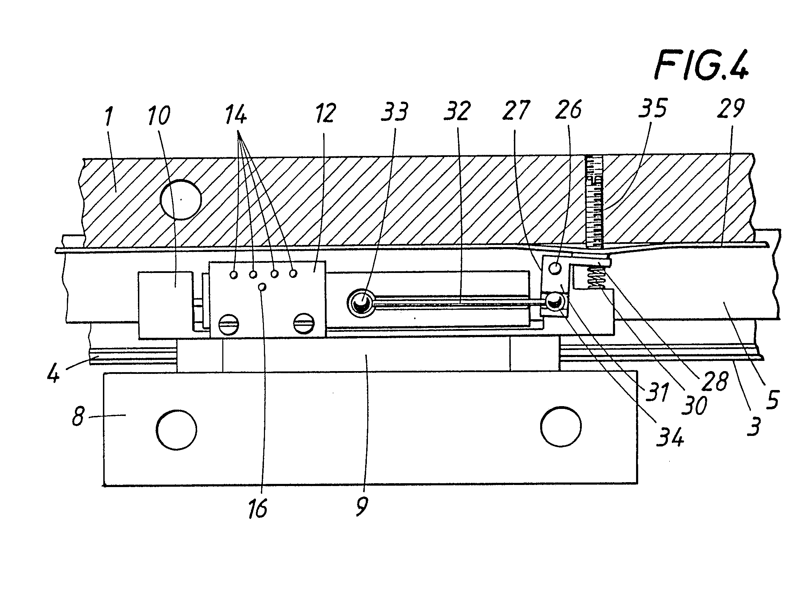

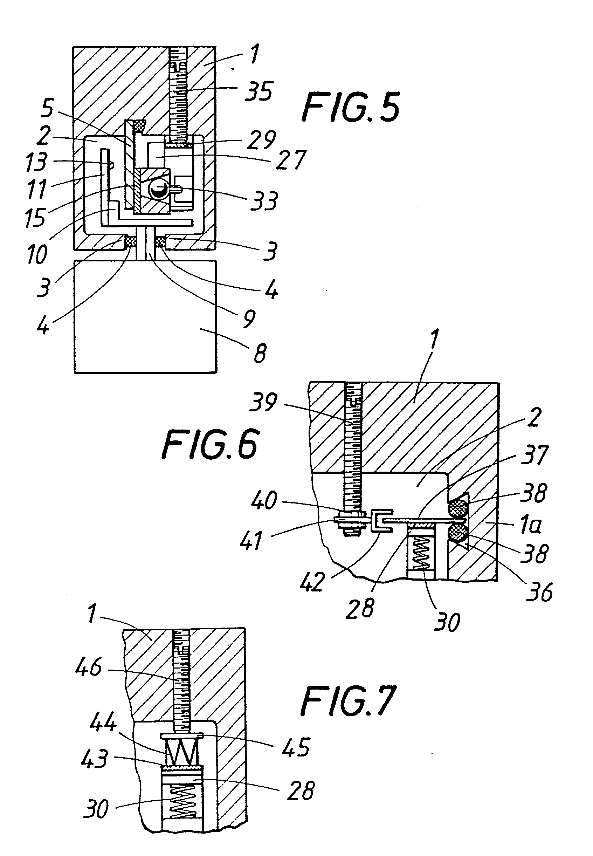

Die Ausführung nach den Fig. 4 und 5 unterscheidet sich von der Konstruktion nach den Fig. 1–3 nur hinsichtlich des für die Verstellung der Abtastplatte 15 verwendeten Stelltriebes, weshalb für die weiteren Teile die gleichen Bezugzeichen wie in den Fig. 1–3 verwendet wurden.

Für die Verstellung der Abtastplatte 15 dient hier ein am Schiffchen 10 um eine Querachse 26 schwenkbar gelagerter Winkelhebel 27, bei dem der eine Schenkel 28 einen mit einem Abtastprofil 29 in Eingriff stehender Fühler bildet, der durch eine Druckfeder 30 mit dem Profil 29 in Eingriff gehalten wird. Der zweite Arm 31 des Winkelhebels 27 steht über eine Pleuelstange 32, die an den Enden Kugeln 33, 34 trägt, mit dem Schiffchen 10 in Antriebsverbindung. Das Führungsprofil besteht aus einem gespannten Stahlband, das über Wurmschrauben 35 in seinem Längsverlauf eingestellt werden kann. Für die Längsspannung des Stahlbandes 29 können Federn vorgesehen werden.

Bei der Ausführung des Korrekturprofiles nach Fig. 6 ist in der Seitenwandung 1a des Rohrprofiles 1 eine Schwalbenschwanznut 36 vorgesehen, in die ein Stahlband 37 mit dem einen Längsrand eingreift. Dieses Stahlband 37 ist zwischen in die Nut 36 eingedrückten Schnüren oder Rundprofilen 38 aus Gummi oder Rundprofilen 38 aus Gummi oder gummielastischen Werkstoff eingeklemmt und ragt mit dem grösseren Teil seiner Breite in die Rohröffnung 2. Zur Einstellung des Stahlbandes 37 (es könnte auch ein anderes Metallband Verwendung finden) auf das Korrekturprofil dienen abstandsweise angebrachte Schrauben 39, die über Mitnehmerringe 40 und eine Öse 41 das Band 37 im Randbereich umfassende Schuhe 42 der Höhe nach verstellen können. Der Rand des Bandes 37 kann an jedem Schuh 42 nach oben oder unten verstellt werden, wodurch ein Korrekturprofil eingestellt wird, das vom Fühler 28 abgetastet wird.

Nach einer Ausführungsvariante könnte das Band 37 durch eine an das Rohr 1 angeformte einteilige, flache Rippe ersetzt werden.

Nach Fig. 7 wird das Korrekturprofil wieder von einem Band 43 gebildet, das mit einem quer gefalteten Folienstreifen 44 zu einem Laminat verbunden ist, wobei an den vom Band 43 abweisenden Faltstellen des Folienstreifens Kopfplatten 45 oder ein durchgehendes Band befestigt sind, in das ein Kopfteil einer Wurmschraube 46 drehbar eingreift, so dass die Kopfteile bzw. das Band 43 der Höhe nach eingestellt werden können.

In den Ausführungsbeispielen wurden im Durchlichtverfahren arbeitende optoelektronische Abtasteinheiten dargestellt. Die erfindungsgemässe Konstruktion kann auch bei im Auflichtverfahren arbeitenden Einheiten verwirklicht werden.

**Patentansprüche**

1. Längenmesseinrichtung, insbesondere gekapselte Längenmesseinrichtung, mit einem an einem Träger (1) gehaltenen Massstab (5) und einer optoelektronischen Abtasteinheit (10) mit Abtastplatte (15), Beleuchtungseinrichtungen (13) und lichtempfindlichen Empfängern (14), wobei die Abtasteinheit (10) über einen mit einem Messfühler (8) verbundenen Mitnehmer (9) in Längsrichtung des Massstabes (5) verstellbar ist, lediglich die Abtastplatte (15) am Massstab (5) selbst verschiebbar geführt und eine Korrektureinrichtung vorgesehen ist, in der ein Korrekturprofil (24, 29, 37, 43) abtastender Fühler (23, 28) die Abtastplatte (15) der Abtasteinheit (10) gegenüber dem Mitnehmer (9) und den übrigen Teilen (10, 11, 12) der Abtasteinheit in Abtastrichtung vor oder nacheilend einstellt, wobei die Abtastplatte (15) mit dem Mitnehmer (9) und den übrigen Teilen (10, 11, 12) der Abtasteinheit über eine Pleuelstange (20, 32) antriebsverbunden ist, wobei das eine Ende der Pleuelstange an der Abtastplatte (15) angreift und das andere Ende der Pleuelstange zu einem Stelltrieb (18, 19, 23, 31, 28) führt, der vom Fühler (23, 28) der Korrektureinrichtung entsprechend dem Verlauf des Korrekturprofiles (24, 29, 37, 43) betätigbar ist.

2. Längenmesseinrichtung nach Anspruch 1, wobei der Stelltrieb (18, 19, 23) als Schraubentrieb ausgebildet ist, dessen in Verstellrichtung angeordnete Schraube (19) über den Fühler (23) bei der Abtastung des Korrekturprofiles (24) verdrehbar in ein Muttergewinde (18) eingreift.

3. Längenmesseinrichtung nach Anspruch 1, wobei der Stelltrieb als auf der Abtasteinheit (10) gelagerter Winkelhebel (27), ausgebildet ist, der mit dem einen Arm (28) durch eine Feder (30) gegen das Korrekturprofil (29) gedrückt ist und über die an seinem anderen Arm (31) angreifende Pleuelstange (32) mit der Abtastplatte (15) verbunden ist.

4. Längenmesseinrichtung nach einem der Ansprüche 1 bis 3, wobei das in einem auch den Massstab (5) aufnehmenden Profilrohrträger untergebrachte Korrekturprofil (24, 29) aus einem gespannten Metallband besteht, das in seinem Längsverlauf durch abstandsweise angebrachte, im Träger (1) geführte Stellschrauben (25, 35) einstellbar ist.

5. Längenmesseinrichtung nach einem der Ansprüche 1 bis 3, wobei das in einem auch den Massstab (5) und die Abtasteinheit (10) aufnehmenden Profilrohr (1) untergebrachte Korrekturprofil aus einem mit dem einen Rand in einer Nut (36) des Profilrohres (1) zwischen an diesem Rand und den Breitseiten angreifenden, elastisch nachgiebigen Einlagen (38) gehaltenen Metallband (37) besteht, das über am anderen Rand angreifende Stellschrauben (39) in seinem Längsverlauf einstellbar ist, wobei der Fühler (28) an einer aus der Nut (36) herausragenden Breitseite des Bandes (37) angreift.

6. Längenmesseinrichtung nach einem der Ansprüche 1 bis 3, wobei das Korrekturprofil aus einem Laminat (43, 44, 45) aus einem Metallband (43) und einem einseitig aufgesetzten, quer gefalteten und an den bandseitigen Faltstellen mit dem Band (43) verbundenen Folienstreifen (44) besteht, auf dem an der vom Band (43) abweisenden Seite mit Stellschrauben (46) verbundene Köpfe (45) oder ein weiteres, mit den Stellschrauben verbundenes Band aufgesetzt sind.

## Revendications

1. Dispositif de mesure des longueurs, notamment dispositif de mesure des longueurs protégé sous capsule, comprenant une règle graduée (5), fixée à un support (1), et une unité de lecture opto-électronique (10) comprenant une plaque de lecture (15), des dispositifs d'éclairage (13) et des récepteurs photo-sensibles (14), dans lequel l'unité de lecture (10) peut être déplacée dans la direction longitudinale de la règle graduée (5) au moyen d'un entraîneur (9) lié à un capteur de mesure (8), la plaque de lecture (15) étant seule guidée mobile en translation le long de la règle graduée (5) et dans lequel il est prévu un dispositif de correction dans lequel un capteur (23, 28), qui explore un profil de correction (24, 29, 37, 43) règle la plaque de lecture (15) de l'unité de lecture (10) en avance ou en retard par rapport à l'entraîneur (9) et aux autres parties (10, 11, 12) de l'unité de lecture, dans le sens de la lecture, la plaque de lecture (15) étant reliée cinématiquement à l'entraîneur (9) et aux autres parties (10, 11, 12) de l'unité de lecture par l'intermédiaire d'une bielle (20, 32), l'une des extrémités de la bielle attaquant la plaque de lecture (15) et l'autre extrémité de la bielle menant à un organe de réglage (18, 19, 23, 31, 28) qui peut être actionné par le capteur (23, 28) du dispositif de correction en fonction de l'allure du profil de correction (24, 29, 37, 43).

2. Dispositif de mesure des longueurs selon la revendication 1, dans lequel l'organe de réglage (18, 19, 23) est constitué par un mécanisme à vis, dont la vis (19), disposée dans la direction du réglage, se visse dans un filetage d'écrou (18), et tourne sous l'action du capteur (23) lors de l'exploration du profil de correction (24).

3. Dispositif de mesure des longueurs selon la revendication 1, dans lequel l'organe de réglage est constitué par un levier coudé (27) est articulé sur l'unité de mesure (10) et qui est pressé contre le profil de correction (29) par son premier bras (28), sous l'action d'un ressort (30), et qui est relié à la plaque de lecture (15) par l'intermédiaire de la bielle (32) qui attaque son autre bras (31).

4. Dispositif de mesure des longueurs selon une des revendications 1 à 3, dans lequel le profil de correction (24, 29), logé dans un support tubulaire profilé qui renferme aussi la règle graduée (5), est constitué par une bande métallique tendue, qui peut être réglée en profil longitudinal, par des vis de réglage (25, 35) disposées à un certain écartement mutuel et montées dans le support (1).

5. Dispositif de mesure des longueurs selon les revendications 1 à 3, dans lequel le profil de correction, logé dans un tube profilé (1) qui renferme aussi la règle graduée (5) et l'unité de lecture (10), est constitué par une bande métallique (37), qui est tenue, par l'un de ses bords, dans une rainure (36) du tube profilé (1), entre des insertions (38) capables de prêter élastiquement, qui attaquent ce bord et les côtés larges, bande qui peut être réglée en profil longitudinal au moyen de vis de réglage (39) qui attaquent l'autre bord, le capteur (28) attaquant un côté large de la bande (37) qui émerge de la rainure (36).

6. Dispositif de mesure des longueurs selon l'une des revendications 1 à 3, dans lequel le profil de correction est constitué par un stratifié (43, 44, 45) composé d'une bande métallique (43) et d'une bande de pellicule (44) montée d'un côté, plissée transversalement et fixée à la bande (43) au niveau de ses plis côté bande, bande de pellicule sur laquelle sont posées, sur le côté qui est le plus éloigné de la bande (43), des têtes (45) liées à des vis de réglage (46), ou une autre bande reliée aux vis de réglage.

**Claims**

1. An instrument for measuring lenghts, particularly a sealed instrument for measuring lengths, comprising a rule (5) which is mounted on a carrier (1) and an optoelectronic scanning unit (10) including a scanning plate (15), illuminating means (13) and light receivers (14), wherein the scanning unit (10) is movable along the rule (5) by a coupling member (9), which is connected to a measuring feeler (8), only the scanning plate (15) is guided to be displaceable by the rule (5), and correcting means are provided, in which a correcting profile (24, 29, 37, 43) is scanned by a feeler (23, 28) for adjusting in the scanning direction in a leading or trailing sense the scanning plate (15) of the scanning unit (10) relative to the coupling member (9) and the remaining parts (10, 11, 12) of the scanning unit, and wherein the scanning plate (15) is connected to the coupling member (9) and the remaining parts (10, 11, 12) of the scanning unit by a connecting rod (20, 32), one end of which engages the scanning plate (15) whereas the other end of the connecting rod leads to an adjusting mechanism (18, 19, 23; 31, 28), which is operable by the feeler (23, 28) of the correcting means in accordance with the configuration of the correcting profile (24, 29, 37, 43).

2. An instrument for measuring lenghts according to claim 1, wherein the adjusting mechanism (18, 19, 23) consists of a screw drive comprising a screw (19), which extends in the adjusting direction and during the scanning of the correcting profile (24) by the feeler (23) rotatably extends into female screw threads (18).

3. An instrument for measuring lenghts according to claim 1, wherein the adjusting mechanism consists of a bell crank lever (27), which is movably mounted on the scanning unit (10) and one arm (28) of which is urged by a spring (30) against the correcting profile (29) whereas the connecting rod (32) bears on the other arm (31) of the bell crank lever to connect the latter to the scanning plate (15).

4. An instrument for measuring lengths according to any of claims 1 to 3, wherein the correcting profile (24, 29) is accommodated in a profiled tubular carrier, which accommodates also the rule (5), and the correcting profile, consists of a tensioned metal tape, which is adjustable in its longitudinal configuration by spaced apart adjusting screws (25, 35), which are guided in the carrier (1).

5. An instrument for measuring lenghts according to any of claims 1 to 3, wherein the correcting profile is accommodated in a profiled tube (1), which accommodates also the rule (5) and the scanning unit (10), the correcting profile consists of a metal tape (37), one edge of which is held in a groove (36) of the profiled tube (1) between elastically yieldable inserts (38), which bear on said edge and the broadsides, the longitudinal configuration of the tape is adjustable by means of adjusting screws (39), which engage the other edge, and the feeler (28) engages the type (37) on a broadside which protrudes from the groove (36).

6. An instrument for measuring lengths according to any of claims 1 to 3, wherein the correcting profile is a laminate (43, 44, 45) consisting of a metal tape (43) and a film strip (44), which is applied to the metal tape (43) on one side and is transversely folded and is joined to the tape (43) at those fold lines which are close to the tape, and heads (45), which are connected to adjusting screws (46) or another tape, which is joined to the adjusting screws, are mounted on the film strip on that side which faces away from the tape (43).

FIG.1

FIG. 2

# FIG. 3

FIG.4

**FIG.5**

**FIG.6**

**FIG.7**